# EUROPEAN PATENT APPLICATION

(11) **EP 1 962 243 A1**
(43) Date of publication of application: **27.08.2008**
(21) Application number: 07380047.6
(22) Date of filing: 21.02.2007
(51) Int. Cl.: G06Q 30/00, G07C 9/00, G06K 9/00

(54) **Advertising impact measuring system and method**

(71) Applicant: Vaelsys Formacion y Desarrollo S.L., 28043 Madrid (ES)
(72) Inventor: Cermeño Mediavilla, Eduardo, 28043 Madrid (ES); Abrines Bendayan, Jorge, 28020 Madrid (ES); Venegas Arrabé, Carlos Jesús, 28100 Alcobendas-Madrid (ES); López Font, Rafael, 28034 Madrid (ES)
(74) Representative: Carvajal y Urquijo, Isabel

(57) **Abstract**

The present invention relates to an advertising impact measuring system and method counting in real time the people (4) looking at a target scene (5). The system comprises a video camera (1) located behind the target scene (5) and data processing means (2) responsible for processing the images captured by the camera (1), comprising a face detection module (9) responsible for analyzing the images it receives from the camera (1) and detecting faces; a face tracking module (10) responsible for calculating the number of different faces N_{F} appearing in each image and its position P_{X,Y} therein; a statistics generation module (12) responsible for receiving the data N_{F}, P_{X,Y} and the time T_{F} each face is in the image coming from the tracking module (10), counting the advertising impact as well as generating statistics in relation to said impact.

## Description

### Field of the Invention

The present invention can be used in any artificial vision and pattern recognition application, and especially for carrying out measurements of advertising impact. More specifically, it can be applied to count the number of people looking at a certain area, such as a billboard, poster or a window front. It is therefore useful to know the advertising scope that different objects (a car in a window front) or news (on a lighted board), for example, may have to know if they are accepted or if, in contrast, they should be changed.

### Background of the Invention

Counting people looking at a certain scene in real time is a very difficult task in artificial vision. For this reason, until now any approaches to people counting devices have been based on mechanical artifacts and rudimentary artificial vision algorithms. Currently, the problem of counting people in movement in real time is based on one of the following techniques:
- Laser or infrared barriers.
- "Agglomeration" counting.
- Head counting with a zenith camera.

The first technique, laser or infrared barriers, consists of the installation of a laser or infrared barrier very similar to the sensor used in elevator doors to detect if someone is entering the car and does not close the door. The drawback of this method is based on its counting imprecision due to the fact that it counts each time the light beam is interrupted by the interposition of a person between the light emitter and the receiver and will therefore count two or three or more individuals entering at the same time as one person. A mean individual velocity to correct the error caused by multiple simultaneous entrances is often used to improve the estimation. Nevertheless, the measurement is very imprecise. It further has a limited application range since it can only be used in doors or accesses.

The agglomeration counting method consists of estimating how many people there are, for example in a protest, by means of measuring the size of an agglomeration of people (by subtracting the image of the actual video frame with a reference frame and thus obtaining the things that have moved) and assuming the average size of a person. The estimation is very imprecise since the method assumes that the people are uniformly spaced in the mass and that there is no space between them. Furthermore in a video sequence they would make an arithmetic mean with the result obtained in each frame, which would provide a very imprecise measurement. With this method the estimation is erroneous from the start since the system it uses everything that has moved, i.e. if someone put a box in front of the scene or if a dog or any other object that had appeared after taking the reference image appears.

The head counting technique with a zenith camera is another method using a zenith camera and counts the heads passing under a door or a threshold. The drawback with this method is that the possible uses of this technology are reduced to counting people passing through a door or access since it is not possible to count advertising impacts, or generally to count people looking at something specific, for example a window front, in virtually any setting with this method.

The novelty of the present invention consists of using a versatile and robust method providing reliable statistics which closely approximate reality. Unlike the different current methods, the present invention allows not only counting people but also allows counting who are looking towards a certain position. This represents a huge advantage for measuring the impact of advertisement, objects displayed in window fronts, etc. Therefore the key point of the present invention is that it allows measuring the public's attention since it is able to measure the attention generated by a certain point or place.

The system object of the invention is additionally much more robust than other solutions since it detects faces with a very high success rate and generates very few double count errors, therefore providing very realistic results.

In the present invention the process of counting the number of people in a video in real time who are looking at a certain place can be divided into the following steps:
- Location of the faces. This process allows cutting the faces out of an image.
- Identification. This step is optional and will only be used in the cases in which it is necessary to reinforce system robustness. Recognizing a face in the image is to locate it, detecting it as a face in said image, while identifying a face further involves assigning it an identification (subject 1, subject 2, etc.). The identification is carried out by means of transforming the face cut-out obtained in the previous step into a print. It can therefore be known in successive images if the person is still present. The techniques for generating these prints are not so precise but in combination with the rest of the system the results are improved. It is generally not used in the present invention since this improvement involves an increase in the complexity of the processes, which is not always desirable.
- Face tracking system.
- Counting device for counting people in the scene.

This technique provides a robust and precise solution which increases the field of use of the advertising impact techniques.

In relation to the first phase, locating faces, there are many research articles aimed at facial recognition. One of the steps of facial recognition consists of detecting the face in an image or video. The present invention has adapted existing research-based algorithms (the main algorithms are detailed below) to obtain a robust face detection system in any environment. It is important to stress the difference between recognizing a face in the sense of identifying the person, and detecting a face, where nothing is identified.

There are currently different face detection methods, the most important ones being:
- Window scanning by applying simple features and an adaptable classification system for locating and cutting out faces in images.
- Face detection using skin classifiers (color and texture).
- Genetic algorithms for locating faces.

However, using only one face detecting method has a drawback, since if only the face detector is used, the people who are looking at the lens would be counted in each video frame, and therefore the same person would be counted several times. For example, if the system works at 10 frames per second, each second that a person looks at the lens 10 people will be counted. A possible solution to this problem is to identify the person who is looking. The problem is that using only an identification method for counting the advertising impact is not robust enough and has been improved by incorporating a face tracking system to the identification of such faces.

The second step, the identification of faces, is an optional step that is usually not applied due to increasing the complexity of the processes.

The third step of the counting method proposed in the present invention is the face tracking throughout the entire video. For the face tracking throughout the video, once a region of the image is detected as a face, the face is tracked such that the people detected in a previous frame and who have been tracked from several frames back will not be counted again, preventing the results from being falsified.

In the event of wanting to use a tracking method to count the advertising impact, said method would count all people and objects (cars, pets, papers floating in the street, etc.) that pass in front of the camera and anything else that moved in front of the scene.

The face tracking system in real time used in the present invention allows knowing if a detected face is the same face that was previously detected. The identification method used is occasionally not very robust (due to changes in light, changes of the orientation of the face, etc.); however, the faces are not lost at any time by applying the tracking method, thereby obtaining satisfactory results in counting the advertising impact.

An important problem of current tracking methods is the computational effort, making it impossible in many cases to track in real time. To that end, an improvement has additionally been introduced in the tracking technique based on a matrix that optimizes the estimation of the future position of the object. If the tracking method is not optimized, the computational load could be so great that results could not be given in real time.

The third step of the method proposed in the present invention is counting people in the scene. Once the faces are detected and their movement has been plotted through the scene, the system is able to generate statistics for counting people who are looking at the object.

The measuring system object of the present invention comprises:
- a system of sensors (usually cameras);
- a process system including an implementation, and improvement, of two subsystems:
   - improved face detector for any environment (it may include auxiliary identification);
   - tracking system that allows knowing the face relation and preventing double counts;
- a system of displaying and controlling the statistical data such as a monitor.

### Description of the Invention

The invention relates to an advertising impact measuring system and method of the type counting the people in real time who look at a certain area, the target scene, according to claims 1 and 9 respectively. Preferred embodiments of the system and of the method are defined in the dependent claims.

The system comprises:
- a video camera located behind the target scene such that the people who look at it are facing the camera and their face is visible, said camera being connected to a data acquisition card;
- data processing means responsible for receiving, treating and processing the images captured by the camera once they have been adapted by the data acquisition card, said processing means comprising the following modules:
   - face detection module responsible for analyzing the images it receives from the camera and detecting faces in such images, obtaining for each analyzed image a set of coordinates C_{X,Y} indicating the rectangles inside said image where the faces are located;
   - face tracking module responsible for receiving for each analyzed image the set of coordinates C_{X,Y} from the detection module, identifying the different faces appearing in each image and tracking such faces in the different consecutive images, such that it is known if there are new faces in the scene covered by the camera or if they were already present beforehand, said tracking module calculating the number of different faces N_{F} appearing in each image and its position P_{X,Y} in such image, where P_{X,Y} is the geometric center of the rectangles where the faces are located;
   - statistics generation module responsible for receiving the data N_{F}, P_{X,Y} and the time T_{F} each face is in the scene coming from the tracking module, counting the advertising impact and generating statistics in relation to said impact;

The data processing means may additionally comprise an image treatment module responsible for graphically treating each image coming from the data acquisition card for the purpose of improving its attributes to facilitating the face detection in each image, sending said treated image to the face detection module.

A variable size window sweeping method is preferably used to detect the faces. These sweeps consist of determining a certain window (or frame) size and run across the image in which faces are sought, frame by frame. If for example a 10x10 frame is defined and the image is 100x100, a sweep would be made in 100 steps.

For carrying out the face detection, the face detection module preferably uses a series of face detection classifiers, each classifier being made up of a set of extended Haar features, some weights corresponding to each feature and a threshold. To classify a region of the image as a face, said region must affirmatively pass all the classifiers. The classifiers have an extremely low rate of false negatives, i.e. if a classifier states that something is not a face, it is very likely that it indeed is not a face. However, if in contrast it states that it is a face, the likelihood that it is not is held high, there being no certainty. The system robustness is based on the fact that since a very large number of classifiers in cascade are used, each of them will efficiently eliminate face candidates, such that after the cascade passes the remaining regions have been "approved" as a face by the entire cascade of classifiers, obtaining a very high probability that it is indeed a face.

The series of classifiers can be trained with an adaptive AdaBoost training algorithm to select the extended Haar features which best eliminate the false negatives in face classification. In order for the system to be robust, each classifier must have a very low rate of false negatives such that it never classifies a region that is indeed a face as "not a face".

The face tracking module can consider the tracking of a person's face to be finished when this person stops looking at the target scene for a predetermined time. Said face tracking module can additionally be configured to identify faces by means of using the non-negative matrix factorization (NMF) algorithm. The face tracking module preferably carries out the tracking by means of a prediction method, assigning each detected face a point that coincides with its geometric center and predicting where said point will be positioned in the next image.

The system additionally comprises display means connected to the data processing means, where the results of the advertising impact measuring are displayed.

An advertising impact measuring method is also an object of the present invention, which comprises the following steps:
a- capturing a sequence of images from a position such that said sequence captures the faces of the people looking at the target scene;
b- analyzing each image of said sequence as it is obtained and detecting the different faces appearing in each image;
c- obtaining for each analyzed image a set of coordinates C_{X,Y} indicating the rectangles inside said image where the faces are located;
d- calculating the number of different faces N_{F} appearing in each image and obtaining their position P_{X,Y} in said image, where P_{X,Y} is the geometric center of the rectangles where the faces are located;
e- determining if the faces appearing in each image are new, or in contrast if they were already in the previous image of the video;
f- counting the advertising impact throughout the sequence of images, taking into account the number of different faces N_{F} appearing in each image and the time TF each face is in the scene;
g- generating statistics of the result of the advertising impact measuring.

The method may additionally comprise, and prior to step e), the step of identifying the different faces appearing in each image. This is complementary to the tracking system and is useful to know if the person was previously in the scene. Each time there is a new subject he or she is identified with a label, for example "Subject 1", if the tracking system has doubts about where "Subject 1" has moved and the identification system is activated it can be consulted to increase the probability of knowing if "Subject 1" is still in the scene or has left. Usually it is enough with the tracking system.

The method may also comprise a step consisting of graphically treating each image of the sequence for the purpose of improving its attributes to facilitating detecting the faces in each image.

In the same way as for the system, a series of classifiers is preferably used to detect the faces in each image, each classifier being made up of a set of extended Haar features, weights corresponding to each feature and a threshold. To classify a region of the image as a face said region must affirmatively pass all the classifiers. The series of classifiers can be trained with an adaptive AdaBoost training algorithm to select the extended Haar features which better eliminate the false negatives in face classification.

The tracking of a person's face in the sequence of images can be considered to be concluded when this person stops looking at the target scene for a predetermined time.

If the faces are identified, the non-negative matrix factorization (NMF) algorithm can be used.

The face tracking is preferably carried out by means of a prediction method, assigning to each detected face a point that coincides with its geometric center and predicting where said point will be positioned in the next image.

The method may additionally comprise displaying the results of the advertising impact measuring.

### Brief Description of the Drawings

A series of drawings aiding to better understand the invention and which are expressly related to an embodiment of said invention, presented as a non-limiting example thereof, is very briefly described below.
Figure 1 shows a basic scheme of the system object of the invention.
Figure 2 shows a more detailed scheme of the system.

### Description of a Preferred Embodiment of the Invention

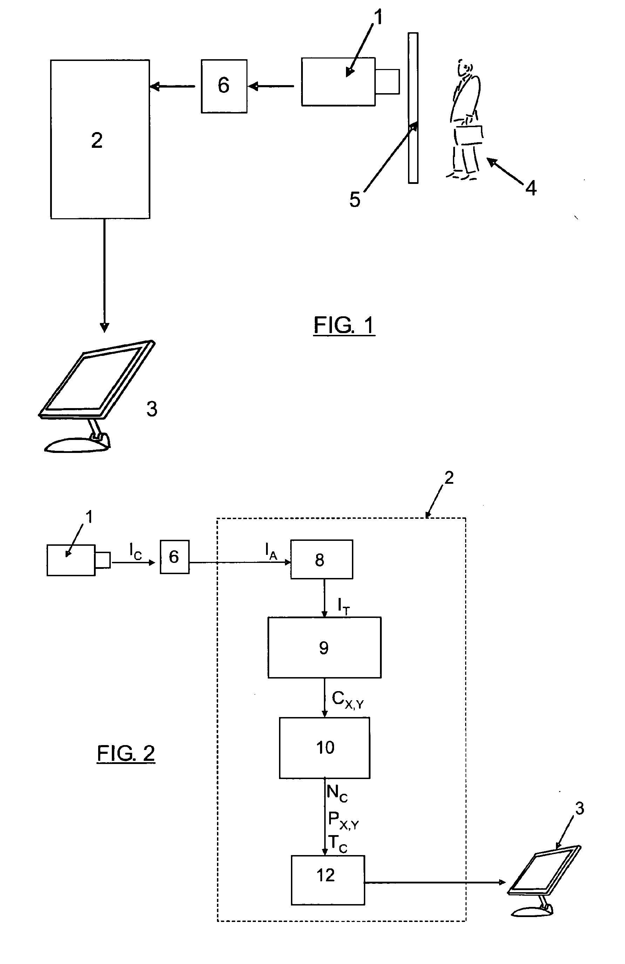

The present invention consists of a technique for counting people looking at a certain area. As shown in Figure 1, the invention consists of a system made up of a camera 1 and data processing means 2, which carry out the counting method, connected to display means 3 where the results are displayed.

The camera 1 can be any color or black and white camera. It can also be analog or digital. It is connected (either by means of an RJ45 cable or a coaxial cable, or communicated by IP) to a data acquisition card 6 capturing the data of the camera and it is sent to the suitably adapted data processing means 2. The camera is located behind the target scene or area 5 which is to be studied, such that the people 4 looking at that area are facing the camera 1 and their face is visible. In the case of Figure 1, the target scene 5 of interest on which a study of the advertising impact is to be carried out is a window front, behind which the camera 1 is located focusing on the window front in order to be able to detect the faces of the people 4 who fix their attention on the window front.

The counting process carried out by the data processing means consists of three steps: location of the faces, identification and tracking of the faces and statistics generator (counting device).

In relation to capturing faces, the system is able to detect faces of any size, even in the same scene (due to the effect produced by perspective). Those faces which are looking at the target scene 5 which are to be subjected to impact measuring are captured and cut out. Each person 4 is counted only once unless the person stops looking at the area for a configurable number of seconds and looks at it again. The system supports, among others, faces of people with a beard, without a beard, people with glasses, without glasses and who take them off for looking.

Figure 2 schematically shows the counting process. First, once the data processing means 2 have received an adapted image I_{A} from the image I_{F} coming from the camera 1, through the data acquisition card 6, said image I_{A} is processed and treated in an image treatment module 8, obtaining a treated image IT. Said module has the purpose of treating the image to improve the brightness, contrast, definition and other attributes of the image so that the treated image I_{T}, by means of the application of several image improvement algorithms and which is sent to a face detection module 9, has optimal features for face detection.

Once the face detection module 9 has received the treated image IT, it uses the extended HAAR algorithm, which consists of using a "cascade" of classifiers based on Haar-type features. The cascade of classifiers consists of a series of simple classifiers described below.

To classify an object as a face, it has to affirmatively pass all the classifiers. Each classifier is made up of a set of Haar features, weights corresponding to each feature and a threshold determining the decision. When a classifier responds negatively, the object is rejected as a possible face.

The cascade of classifiers is trained with an AdaBoost algorithm (algorithm based on classification and adaptive training) to select the features which best eliminate the false negatives in the first steps and to perfect the classification in future steps.

The set of extended Haar features responsible for computing the difference of gray values between two regions is used in the face detection module 9.

There are several types of Haar-type features: Bi-Verticals, Bi-Horizontals, Tri-Verticals, Tri-Horizontals, Diagonals and Centrals and their corresponding features rotated 45%. Each one weights a certain feature in an object.

One of the advantages of using these Haar features is that they are easy to redimension to any size and position with barely any computational cost, such that it is possible to look for faces in an image at any scale with the same set of features. The algorithm is able to generalize the features which best define a face and to find faces under very different conditions: with a beard, glasses, different lighting, different background, etc.

The output of this step of the process is a set of coordinates C_{X,Y} indicating where the faces are located in an image.

In relation to the face tracking method, to ensure that each person is counted only once the face of each person must be identified and his or her movement must be tracked over time. The system stops tracking the person 4 when the person stops looking at the target scene 5 for a previously configured number of seconds. Once a person is identified, the system predicts where the person is moving towards, afterwards automatically correcting the prediction. The tracking method used is lightweight, i.e. it optimizes the calculations such that it is able to carry out all the calculations in real time. The tracking method supports people crossing in front of one another.

Once the face detection module 9 has located the faces in the treated image I_{T}, it sends to a face tracking module 10 information with the coordinates C_{X,Y} defining the rectangles of the image in which the faces have been detected. This face tracking module 10 is responsible for tracking the faces, for which purposes it uses a particle system-based tracking method. A particle is assigned for each face in its center of masses. The tracking module 10 predicts where the same face will be in the next image of the video sequence. The position of the particle is corrected in the next image. The NMF (non-negative matrix factorization) algorithm can additionally be used to identify the faces and increase the robustness of the tracking.

The non-negative matrix factorization, NMF, is a dimensionality reduction system based on the description/representation of a data set using non-negative functions with a certain degree of dispersion. It can geometrically be described as a simple cone where the data are located in scatter plot form, which is found in a positive area in space. In a practical manner, starting from a set of basic experiments V, they can be divided into two subsets W and H, which will contain the basic information of each element and the degree of presence of said basic information, respectively.

The data obtained are forced to be not negative, which means that the data are represented only with additive components. This is because in most applications the negative data make no sense and are difficult to interpret, it is further based on the idea that in the composition of a set additive combinations of simpler elements are used. Apart from this non-negative imposition, optimal subsets will be defined as those subsets minimizing the error between the original data and the product of the subsets.

The most interesting application of NMF is related to the learning of parts/features of a data set. The degree of dispersion is defined as the units of a broad population set with which a data set can be effectively represented. The results can be adjusted to the original type of data by controlling the dispersion of the data obtained with NMF.

The tracking algorithm uses two types of agents:
- Objects, representing people, cars, or anything else used as a target to be tracked.
- Particles, two-dimensional points subjected to physical laws. The tracking algorithm has been improved to increase its speed such that the information can be treated in real time.

To increase the velocity, the association of objects to particles has been accelerated; to that end a matrix is used in which the columns represent the centers of masses of the particles present in the scene, the centers of masses of the objects detected in the image are represented as the rows and the content of the matrix are the distances of particles to the objects. The association consists of the following:
1. Looking for the maximum of the matrix, Mm, the coordinates of which are (x,y). The lesser value of the row x and the column y are selected. The particle with the smallest distance to the object is thus associated. Once associated, the values of the row x and the column y are discarded.
2. It is iterated until associating all the particles or all the targets.

As a result, it may occur that there is an identical number of objects and of particles, therefore the association will have finished. If the number of objects is less than the number of particles, it means that an object has disappeared or has fused with another object. If the number of objects is greater than the number of particles, it means that a new object has appeared in the scene, therefore a new particle is associated to the system.

The output of this block of the counting process, the face tracking module 10, is the number of different faces N_{F} that there are in the scene as well as their P_{X,Y} in the image. Once the number of different people that there are in the scene is determined, statistics are generated, which is done in the statistics generation module 12, which receives the information of the number of different faces provided by the tracking module 10.

The tracking module 10 is useful to know if the faces that there are in an image were in the previous image. In other words, if 2 faces have been detected for example, the tracking module confirms if they are new or not. Many statistics can thus be generated: the number of people who have looked at an advertisement in one day, average number of people per hour, hours during which more people have looked at an advertisement, the position from which the advertisement was looked at, the average observation time of an advertisement, advertisement which drew the most attention, advertisement in which the people have spent more time, advertisement that has drawn the attention of more people simultaneously, etc. For all this all that is needed is: the number of faces and position provided by the detection module. The tracking module provides whether or not they are new. The rest can be deduced with this information and a time and people counting device.

The statistics generator module 12 knows what position the people who are looking are in, so in addition to counting the advertising impact it is able to generate a "heat map" to indicate the most viewed areas. It can generate statistics according to the hours of the day, for example to know the advertising impact throughout the day, or according to days of the week.

All the data calculated by the statistics generation module can be displayed in display means 3 connected to the processing means 2, where the results of the performed measuring are displayed.

## Claims

1. An advertising impact measuring system of the type counting in real time the people (4) looking at a certain area, a target scene (5), **characterized in that** it comprises:
- a video camera (1) located behind the target scene (5) such that the people (4) looking at it are facing the camera and their face is visible, said camera (1) being connected to a data acquisition card (6);
- data processing means (2), responsible for receiving, treating and processing the images captured by the camera (1) once they have been adapted by the data acquisition card (6), said processing means comprising the following modules:
- face detection module (9), responsible for analyzing the images it receives coming from the camera (1) and detecting faces in such images, obtaining for each analyzed image a set of coordinates C_{X,Y} indicating the rectangles inside said image where the faces are located;
- face tracking module (10), responsible for receiving for each analyzed image the set of coordinates C_{X,Y} coming from the detection module (9), detecting the different faces appearing in each image and tracking the faces throughout the different consecutive images, such that it is known if they are new faces in the scene covered by the camera or if they were already previously present, said tracking module (10) calculating the number of different faces N_{F} appearing in each image and their position P_{X,Y} therein, where P_{X,Y} is the geometric center of the rectangles where the faces are located;
- statistics generation module (12) responsible for receiving the data N_{F}, P_{X,Y} and the time T_{F} each face is in the image coming from the tracking module (10), counting the advertising impact as well as generating statistics in relation to said impact.

2. A system according to claim 1, **characterized in that** the data processing means (2) additionally comprise an image treatment module (8) responsible for graphically treating each image coming from the data acquisition card for the purpose of improving its attributes to facilitate the face detection in each image, sending said treated image to the face detection module (9).

3. A system according to any of the previous claims, **characterized in that** the face detection module (9) uses a series of classifiers to carry out face detection, each classifier being made up of:
- a set of extended Haar features;
- weights corresponding to each feature;
- a threshold;
and **in that** to classify a region of the image as a face, said region must affirmatively pass all the classifiers.

4. A system according to the previous claim, **characterized in that** the series of classifiers is trained with an adaptive AdaBoost training algorithm to select the extended Haar features which best eliminate the false negatives in face classification.

5. A system according to any of the previous claims, **characterized in that** the face tracking module (10) considers the tracking of a face of a person to be concluded when the person stops looking at the target scene (5) for a predetermined time.

6. A system according to any of the previous claims, **characterized in that** the face tracking module (10) is additionally configured to identify the faces by means of using the non-negative matrix factorization (NMF) algorithm.

7. A system according to any of the previous claims, **characterized in that** the face tracking module (10) carries out the tracking by means of a prediction method, assigning to each detected face a point that coincides with its geometric center and predicting where said point will be positioned in the next image.

8. A system according to any of the previous claims, **characterized in that** it additionally comprises display means (3) connected to the data processing means (2), in which the results of the advertising impact measuring are represented.

9. An advertising impact measuring method of the type counting in real time the people (4) looking at a certain area, a target scene (5), **characterized in that** it comprises the following steps:
a- capturing a sequence of images from a position such that said sequence capture the faces of the people (4) looking at the target scene (5);
b- analyzing each image of said sequence as it is obtained and detecting the different faces appearing in each image;
c- obtaining for each analyzed image a set of coordinates C_{X,Y} indicating the rectangles inside said image where the faces are located;
d- calculating the number of different faces N_{F} appearing in each image and obtaining their position P_{X,Y} in said image, where P_{X,Y} is the geometric center of the rectangles where the faces are located;
e- determining if the faces appearing in each image are new, or in contrast if they were already in the previous image of the video and calculating the time T_{F} each face is present in the scene;
f- counting the advertising impact throughout the sequence of images, taking into account the number of different faces N_{F} appearing in each image; and
g- generating statistics of the result of the advertising impact measuring.

10. A method according to the previous claim, **characterized in that** it additionally comprises, and prior to step e), the step of identifying the different faces appearing in each image.

11. A method according to claim 10, **characterized in that** the non-negative matrix factorization (NMF) algorithm is used for the face identification.

12. A method according to any of claims 9 to 11, **characterized in that** it additionally comprises graphically treating each image of the sequence for the purpose of improving its attributes to facilitate face detection in each image.

13. A method according to any of claims 9 to 12, **characterized in that** a series of classifiers is used to detect the faces in each image, each classifier being made up of:
- a set of extended Haar features;
- weights corresponding to each feature;
- a threshold;
and **in that** to classify a region of the image as a face said region must affirmatively pass all the classifiers.

14. A method according to the previous claim, **characterized in that** the series of classifiers is trained with an adaptive AdaBoost training algorithm to select the extended Haar features which best eliminate the false negatives in face classification.

15. A method according to any of claims 9 to 14, **characterized in that** the tracking of a person's face in the sequence of images is considered to be concluded when the person stops looking at the target scene (5) for a predetermined time.

16. A method according to any of claims 9 to 15, **characterized in that** the tracking of the faces is carried out by means of a prediction method, assigning to each detected face a point that coincides with its geometric center and predicting where said point will be positioned in the next image.

17. A method according to any of claims 9 to 16, **characterized in that** it additionally comprises displaying the results of the advertising impact measuring.
